# EUROPEAN PATENT SPECIFICATION

(11) **EP 2 222 193 B1**
(45) Date of publication and mention of the grant of the patent: **18.02.2015**
(21) Application number: 08866988.2
(22) Date of filing: 09.12.2008
(51) Int. Cl.: A23L 1/303, A23L 1/304, A23L 2/00, A23L 2/02, A23L 2/52

(54) **CALCIUM-FORTIFIED BEVERAGES AND METHOD OF MAKING THEREOF**
MIT CALCIUM VERSETZTE GETRÄNKE UND HERSTELLUNGSVERFAHREN DAFÜR
BOISSONS ENRICHIES EN CALCIUM ET PROCÉDÉ DE PRÉPARATION DE CELLES-CI

(30) Priority: 20.12.2007 US 961689
(43) Date of publication of application: 01.09.2010
(73) Proprietor: TROPICANA PRODUCTS, INC., Bradenton, FL 34208 (US)
(72) Inventor: RIVERA, Teodoro, Algonquin IL 60102 (US); SHIELDS, Nicholas, Carpentersville IL 60110 (US); DOUGLASS-MICKEY, Jason, Mchenry IL 60050 (US)
(74) Representative: Duxbury, Stephen
(86) International application number: PCT/US2008/086073
(87) International publication number: WO 2009/085596

(56) References cited:
- EP-A- 0 634 110
- US-A- 4 871 554
- DEBORAH A.STRAUB: "Calcium Supplementation in Clinical Practise: A Review of forms, doses, indications" NUTRITION IN CLINICAL PRACTISE, vol. 22, no. 286, June 2007 (2007-06), pages 286-296, XP002518835
- T.JENSDOTTIR, A.BARDOW, P.HOLBROOK: "Properties and modification of soft drinks in relation to their erosive potential in vitro" JOURNAL OF DENTISTRY, vol. 33, 8 December 2004 (2004-12-08), pages 569-575, XP002518836
- ANONYMOUS: 'Tricalcium phosphate', [Online] 30 November 2007, pages 1 - 1 Retrieved from the Internet: <URL:http://web.archive.org/web/20071130045 749/http://en.wikipedia.org/wiki/Tricalcium _phosphate> [retrieved on 2011-08-24]
- T.E.Furia: "Handbook of Food Additives", 1 January 1972 (1972-01-01), CRC Press, Boca Raton vol. 2, pages 624-624, * the whole document *

## Description

### TECHNICAL FIELD

The invention relates to calcium-fortified orange juice beverages and a method of making. More particularly, the present invention relates to a commercially economical method of fortifying beverages with calcium and to the resulting beverage which has good organoleptic properties, despite the presence of added calcium.

### BACKGROUND OF THE INVENTION

A known commercially successful way to fortify beverages is to add calcium citrate malate. However, adding calcium citrate malate adds operational complexity and operational costs. For example, calcium citrate malate readily precipitates during pasteurization resulting in equipment scaling, thereby increasing beverage processing costs. Therefore, there is a need for alternative calcium sources that do not cause processing issues.

Other calcium sources for beverages are known in the art. However, such fortification systems generally have taste drawbacks. For example, calcium chloride gives a salty aftertaste. Calcium hydroxide and calcium oxide neutralize acids in beverages resulting in flat tasting beverages. Calcium lactate has a bitter aftertaste. Tricalcium phosphate has a metallic aftertaste. Calcium sulfate has a very dry aftertaste. Thus, there is a need for a calcium-fortified beverage that does not have a significant taste drawback.

In addition, some calcium sources are sparingly or moderately soluble, making use in beverages difficult or impractical. Calcium citrate is sparingly soluble at nutritionally significant levels. In beverages, moderately and sparingly soluble calcium sources may cause grittiness or cause a milky cloudiness, both of which generally are not considered desirable by consumers and thus cannot be used to provide soluble or dissolved calcium. In addition, the amount of calcium provided by a beverage having a sparingly soluble calcium source may vary significantly from one package to the next and even from one serving to the next within a package.

There is a need for calcium sources for beverages that are less expensive and for a resulting beverage that does not have taste drawbacks as a result of the presence of calcium.

A need also exists for a calcium-fortified beverage that does not require the presence of added citric acid or a citrate compound.

US48715554 relates to a calcium-fortified food product.

EP06344110 relates to a liquid food product.

### SUMMARY OF THE INVENTION

In accordance with the present invention, a calcium-fortified orange juice beverage is provided according to claims 1-6. It has been discovered that the combination of calcium lactate and hydroxyapatite in particular amounts has a surprisingly good taste, that is, the absence of a significant negative taste attribute as a result of the calcium source.

In accordance with still another aspect of the invention, a method of making an orange juice beverage is provided according to claims 7-9.

### BRIEF DESCRIPTION OF THE DRAWINGS

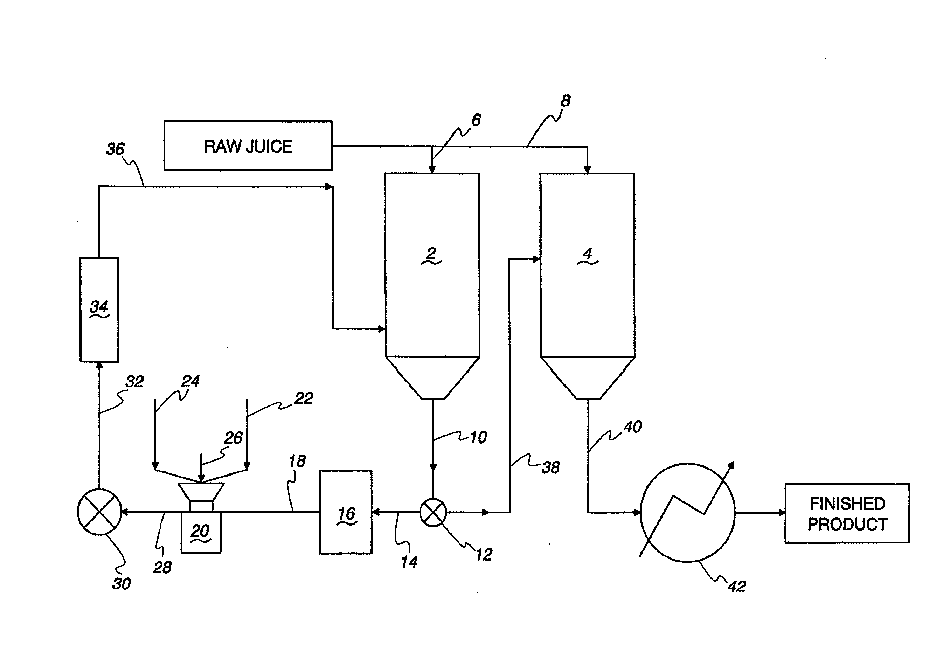

The figure is a process flow diagram illustrating a method of making a beverage in accordance with the invention.

### DETAILED DESCRIPTION OF THE INVENTION

In accordance with the present invention, a calcium-fortified orange juice beverage is provided.

The calcium source for fortifying the juice is such that from 40% to 65% of the calcium is from calcium lactate and from 35% to 60% of the calcium is from hydroxyapatite. Calcium lactate added by itself to a beverage causes a bitter aftertaste. Tricalcium phosphate, including hydroxyapatite added by itself to a beverage causes a metallic aftertaste. Surprisingly, although both calcium lactate and tricalcium phosphate each have taste drawbacks, it has been found that their combination in the relative amounts disclosed does not have a significant taste drawback.

For clarity, calcium source does not include the calcium that is naturally endogenous to juice. Also, hydroxyapatite is often known as tricalcium phosphate. However, technically hydroxyapatite is not the same as tricalcium phosphate. Hydroxyapatite is a naturally occurring mineral having the approximate formula of 10CaO·3 P₂O₅·H₂O or Ca₁₀(PO₄)₆(OH)₂ having a crystal unit cell comprising two molecules, while tricalcium phosphate has the formula Ca₃(PO₄)₂.

The calcium in the fortified beverage is in a nutritionally significant amount, not less than 100 mg per 240 ml serving. Preferably, the beverage provides at least about 180 mg of calcium per 240 ml serving. More preferably, the beverage provides from about 250 mg to about 500 mg of calcium per 240 ml serving. Still more preferably, the beverage provides from about 300 mg to about 400 mg of calcium per 240 ml serving or even from about 325 mg to about 375 mg or 350 mg of calcium per 240 ml serving.

The flavor of the calcium-fortified beverage is improved by adding a topnote flavor component to mask any subtle off tastes from the calcium source. As used herein, topnote flavor is the predominant initial flavor that is detected when the product is tasted or consumed. For orange juice, the topnote is orange citrus flavor. For orange juice, any suitable orange citrus flavor topnote flavor can be used. Such topnote flavors are commercially available from various companies, including Firmenich SA of Geneva, Switzerland, for example. The topnote flavor component can provide a fresh, juicy, raw and natural orange juice taste. When the beverage includes juice, the topnote flavor is derived or extracted from the same fruit or vegetable as the juice and thus can consist of natural flavors. Alternatively, the topnote can consist in whole or in part of artificial flavors. The amount of topnote flavor is in the range of from 0.001% to 0.004% by weight of the total composition.

In addition, the orange juice beverage preferably may be supplemented with vitamin D. Preferably, vitamin D₂, vitamin D₃ or mixtures thereof are used to supplement the beverage with vitamin D. The beverage may provide 50 I.U. or more of vitamin D per 240 ml serving. In one embodiment, the beverage provides at least about 80 I.U. of vitamin D per 240 ml serving.

In addition, the orange juice beverage may be supplemented with various nutraceuticals as desired. Suitable mineral nutraceuticals include magnesium and selenium. Suitable vitamin nutraceuticals include vitamins A, B₁, B₂, B₃, B₆, C, and E. Other suitable nutraceuticals include omega-3 fatty acids, glucosamine and fiber.

Other suitable nutraceuticals include aminosugars such as glucosamine and n-acetyl glucosamine. The glucosamine can be in any suitable form. Some suitable forms of glucosamine include glucosamine sulphate, glucosamine sulphate sodium, glucosamine sulphate potassium, glucosamine hydrochloride, glucosamine hydroiodide, glucosamine acetate, glucosamine citrate, glucosamine dodecanoate, and glucosamine malate. Glucosamine may be derived from shellfish, but can also be produced by fermentation (e.g., fungal or microbial), or enzyme reactions (e.g., of fructose and glutamine) as is well known in the art. A typical amount of aminosugar is from 0.15 wt% to 0.55 wt%, more typically from 0.20 wt% to 0.40 wt%. Glucosamine may be used alone or in combination with other nutraceuticals that may be present in the compositions and methods of the invention, such as collagen, chondroitin, MSM (methyl-sulfonyl-methane), hyaluronic acid, lycopene, linoleic acid, ascorbic acid and their salts.

Preferably, the orange juice beverage is 100% juice apart from the presence of added vitamins, nutraceuticals or other adjuvants.

In an alternate embodiment, the orange juice beverage is a product having substantially less than 100% juice. Preferably the juice product has 5% to 55% juice. The juice product may be sweetened with any suitable nutritive sweeteners and/or high intensity sweeteners for the juice product. Such sweeteners are well known in the art and non-limiting examples of suitable nutritive sweeteners include sucrose, fructose, glucose, maltose, or combinations thereof. Non-limiting examples of suitable high-intensity sweeteners include acesulfame potassium (commonly known as acesulfame K or Ace K), sucralose, stevia extract, lo han guo, monatin, and rebaudioside A. The juice product may also have artificial and natural flavors as desired.

The process of making an orange juice beverage in accordance with the invention will be described with reference to the figure. An orange juice is placed into holding tanks 2 and 4 via suitable delivery piping 6 and 8. Juice can be removed from holding tank 2 via a line 10, through valve 12 where the juice is directed through a line 14 and into a surge tank 16. From surge tank 16, the juice is directed through a line 18 and into shear mixing/dispensing device 20. Mixing device 20 is suitable for mixing solids into liquids and/or liquids into liquids depending on the material being added. Suitable mixers for this purpose are well known in the art and include, for example, mixers sold under the trade designation "TPM +" by APV of Lake Mills, Wisconsin, and the "CMS2000" by IKA Works of Wilmington, North Carolina. Into mixing device 20 dry calcium lactate is introduced via a line 22 and dry hydroxyapatite is introduced via a line 24. The introduction of hydroxyapatite and calcium lactate may be simultaneous or sequential. Alternatively, the calcium lactate and hydroxyapatite can be preblended and then introduced as in the preblended form. The addition to the orange juice can be done on a continuous basis. The calcium lactate powder of line 22 may be introduced at a rate of from 59.90 g/L (0.5 lb/gal) to 119.83 g/L (1.0 lb/gal), and preferably from 71.90 g/L (0.6 lb/gal) to 107.83 g/L (0.9 lb/gal). For example, the hydroxyapatite of line 24 may be introduced at any desired rate, such as, for example, from 23.97 g/L (0.2 lb/gal) to 71,90 g/L (0.6 lb/gal), and preferably from 29.96 g/L (0.25 lb/gal) to 53.90 g/L (0.45 lb/gal) with the orange juice of line 18 at a flow rate of 340.7-378.5 L/minute (90-100 gallons/minute) or greater as desired and as permitted by the equipment being utilized. In addition, the beverages of the invention may also be supplemented with an adjuvant as desired which may be a vitamin, particularly vitamin D, or a nutraceutical which could be a vitamin nutraceutical, for example. Typically, the adjuvant stream, which in this particular case is a vitamin D liquid stream 26, is dispersed in the juice by shear mixer/dispenser 20 and shear mixer 30 as shown in the figure. The adjuvant in stream 26 may include the topnote and any other desired additives. The adjuvant may include vitamin D and/or any desired nutraceutical(s) and the topnote in stream 26. The adjuvant or any portion thereof, including vitamin D and the topnote can be added before, during, but typically after the addition of calcium to the juice.

The combined mixed materials from mixer 20 are fed via a line 28 into an inline high shear mixer 30 to further disperse and dissolve the materials added to the juice in mixer 20. Suitable high shear mixers are well known in the art and include those sold by Silverson in East Longmeadow, Massachusetts or DR2000 from IKA Works of Wilmington, North Carolina.

Next, the resulting mixture stream from high shear mixer 30 is directed via a line 32 to a chiller 34 and then directed via a holding line 36 to tank 2. The juice in process tank 2 is recirculated to tank 16 and the process continues until the desired amounts of calcium lactate, hydroxyapatite and adjuvant(s) are achieved.

The above-described process for adding calcium lactate and hydroxyapatite may be stopped when the concentration of calcium and any desired adjuvants in the juice in tank 2 meets the desired concentration in the final product.

Alternatively, the process may continue so that the level of calcium in the juice in tank 2 exceeds that desired in the final product by any desired amount, which could be, for example, by a factor of 2, 3, 4, 5 or even greater. The juice in tank 2 can then be diluted with juice in tank 4 to achieve the desired final concentration by delivering the juice in tank 2 through valve 12 and a line 38 to tank 4.

The method of the invention allows the calcium adding, mixing and dispersion/solubilization time to be reduced by half relative to the prior art method of adding calcium citrate malate and calcium hydroxide using the same equipment according to pilot data. One reason for this is that the addition of calcium hydroxide in powder mixer 20 has to be relatively slow so as not to cause large pH changes in line 28 and to reduce the temperature rise in line 28, both of which can cause undesirable flavors and improper calcium reaction and/or unwanted insoluble calcium formation.

Once the desired concentration of calcium is achieved, the single-strength juice is taken from tank 4 via a line 40 to heat exchanger 42 for pasteurization. The resulting pasteurized juice can then be packaged, shipped in bulk, or stored for later use. Pilot data indicates that the calcium source of the invention causes less scaling in heat exchanger 42 than the prior calcium source of calcium citrate malate. Improved process efficiency is another reason why the calcium source of the invention has unexpected advantages to prior art calcium sources.

Preferred particle size distribution for the hydroxyapatite and tricalcium phosphate when added to the beverage is less than or equal to 0.5% retained by 0.105 mm (140 mesh) and less than or equal to 5% retained by 0.044 mm (325 mesh), all wet sieving, and more preferably 0.06% retained by 0.105 mm (140 mesh) and 2% retained by 0.044 mm (325 mesh.)

## Claims

1. A calcium-fortified orange juice beverage having a good taste comprising;
orange juice;
a calcium source that provides no less than 100 mg calcium per 240 mL serving, the calcium source comprising 40% to 65% calcium lactate and 35% to 60% hydroxyapatite; and,
an orange citrus flavor topnote in an amount from 0.001% to 0.004% by weight of the total composition.

2. The orange juice beverage of claim 1 further comprising vitamin D, preferably wherein the vitamin D is selected from the group consisting of vitamin D₂, vitamin D₃ and mixtures thereof.

3. The orange juice beverage of claim 2 wherein the beverage provides at least 80 I.U. of vitamin D per 240 ml serving, preferably wherein the beverage provides at least 180 mg of calcium per 240 ml serving.

4. The orange juice beverage of claim 1 wherein the beverage provides from 250 mg to 450 mg of calcium per 240 ml serving, or the orange juice beverage of claim 1 comprising orange juice that is not from concentrate, or the orange juice beverage of claim 1 comprising orange juice that is 100% not-from-concentrate juice exclusive of the orange citrus flavor topnote and any added vitamins and minerals, or wherein the orange citrus flavor topnote is present in an amount sufficient to at least substantially mask the aftertaste of the calcium source.

5. The orange juice beverage according to claim 4 wherein the orange juice is a 100% not-from-concentrate juice.

6. The orange juice beverage of claim 1 further comprising a nutraceutical, preferably wherein the nutraceutical is selected from nutraceutical vitamins, omega-3-fatty acids, aminosugars, fiber and combinations thereof, or
wherein the nutraceutical is selected from glucosamine, collagen, chondroitin, methylsulfonyl-methane, hyaluronic acid, lycopene, linoleic acid and combinations thereof.

7. A method of making an orange juice beverage having a bioavailable source of calcium comprising:
providing no less than 100 mg calcium per 240 mL serving, the calcium being from a calcium source comprising 40% to 65% calcium lactate and 35% to 60% hydroxyapatite;
dissolving the calcium source in orange juice
providing from 0.001 % to 0.004% by weight of the total composition of an orange citrus flavor topnote component sufficient to mask off-taste from the calcium source;
dispersing the orange citrus flavor topnote component in the beverage; and
forming a finished ready-to-drink beverage.

8. The method of claim 7 further comprising providing a source of vitamin D selected from the group consisting of vitamin D₂, vitamin D₃, and mixtures thereof in an amount so that the finished beverage provides at least 50 I.U. of vitamin D per 240 ml serving and dispersing the vitamin D in the beverage.

9. The method of claim 7 or 8 further comprising providing a nutraceutical and dispersing the nutraceutical in the beverage.

## Patentansprüche

1. Mit Calcium angereichertes Orangensaftgetränk mit einem guten Geschmack, das aufweist:
Orangensaft;
eine Calciumquelle, die nicht weniger als 100 mg Calcium pro 240-ml-Portion bereitstellt, wobei die Calciumquelle 40% bis 65% Calciumlactat und 35% bis 60% Hydroxylapatit aufweist; und
eine Orangen-Zitrus-Aromanote in einer Menge von 0,001 % bis 0,004 Gewichts% der Gesamtzusammensetzung.

2. Orangensaftgetränk nach Anspruch 1, das ferner Vitamin D aufweist, wobei das Vitamin D vorzugsweise aus der Gruppe ausgewählt ist, die aus Vitamin D₂, Vitamin D₃ und Mischungen davon besteht.

3. Orangensaftgetränk nach Anspruch 2, wobei das Getränk wenigstens 80 I.E. Vitamin D pro 240-ml-Portion bereitgestellt, wobei das Getränk vorzugsweise wenigstens 180 mg Calcium pro 240-ml-Portion bereitstellt.

4. Orangensaftgetränk nach Anspruch 1, wobei das Getränk von 250 mg bis 450 mg Calcium pro 240-ml-Portion bereitstellt, oder das Orangensaftgetränk nach Anspruch 1, welches Orangensaft aufweist, der nicht aus Konzentrat ist, oder das Orangensaftgetränk nach Anspruch 1, welches Orangensaft aufweist, der außer der Orangen-Zitrus-Aromanote und aller zugesetzter Vitamine und Mineralien zu 100% Saft nicht aus Konzentrat ist, oder wobei die Orangen-Zitrus-Aromanote in einer ausreichenden Menge vorhanden ist, die ausreicht, um wenigstens den Nachgeschmack der Calciumquelle im Wesentlichen zu verdecken.

5. Orangensaftgetränk nach Anspruch 4, wobei der Orangensaft ein Saft ist, der zu 100% nicht aus Konzentrat ist.

6. Orangensaftgetränk nach Anspruch 1, das ferner ein Nahrungsergänzungsmittel aufweist, wobei das Nahrungsergänzungsmittel vorzugsweise aus nahrungsergänzenden Vitaminen, Omega-3-Fettsäuren, Aminozucker, Fasern und Kombinationen davon ausgewählt wird, oder wobei das Nahrungsergänzungsmittel aus Glucosamin, Collagen, Condroitin, Methylsulfonylmethan, Hyaluronsäure, Lycopin, Linolsäure und Kombinationen davon ausgewählt wird.

7. Verfahren zur Herstellung eines Orangensaftgetränks mit einer biologisch verfügbaren Calciumquelle, das aufweist:
Bereitstellen von nicht weniger als 100 mg Calcium pro 240-ml-Portion, wobei das Calcium von einer Calciumquelle stammt, die 40% bis 65% Calciumlactat und 35% bis 60% Hydroxylapatit aufweist;
Auflösen der Calciumquelle in Orangensaft;
Bereitstellen von 0,001% bis 0,004 Gewichts-% der Gesamtzusammensetzung einer Orangen-Zitrus-Aromanotenkomponente, die ausreicht, den Geschmack von der Calciumquelle zu verdecken;
Verteilen der Orangen-Zitrus-Aromanotenkomponente in dem Getränk; und
Ausbilden eines vollendeten trinkfertigen Getränks..

8. Verfahren nach Anspruch 7, das die Bereitstellung einer Vitamin-D-Quelle, die aus der Gruppe ausgewählt ist, die aus Vitamin D₂, Vitamin D₃ und Mischungen davon besteht, in einer Menge, so dass das vollendete Getränk wenigstens 50 I.E. Vitamin D pro 240-ml-Portion bereitstellt, und Verteilen des Vitamin D in dem Getränk aufweist.

9. Verfahren nach Anspruch 7 oder 8, das ferner das Bereitstellen eines Nahrungsergänzungsmittels und das Verteilen des Nahrungsergänzungsmittels in dem Getränk aufweist.

## Revendications

1. Boisson à base de jus d'orange enrichi en calcium ayant bon goût comprenant :
du jus d'orange ;
une source de calcium qui n'apporte pas moins de 100 mg de calcium pour 240 ml de liquide, la source de calcium comprenant de 40 % à 65 % de lactate de calcium et de 35 % à 60 % d'hydroxyapatite ; et
une note dominante d'une saveur orange citron en une quantité de 0,001 % à 0,004 % en poids de la composition totale.

2. Boisson à base de jus d'orange selon la revendication 1, comprenant en outre de la vitamine D, dans laquelle la vitamine D est, de préférence, sélectionnée à partir du groupe constitué par la vitamine D2, la vitamine D3 et un mélange de ces dernières.

3. Boisson à base de jus d'orange selon la revendication 2, dans laquelle la boisson comprend au moins 80 U.I. de vitamine D par portion de 240 ml, dans laquelle la boisson comprend, de préférence, au moins 180 mg de calcium par portion de 240 ml.

4. Boisson à base de jus d'orange selon la revendication 1, dans laquelle la boisson comporte de 250 mg à 450 mg de calcium par portion de 240 ml, ou la boisson à base de jus d'orange selon la revendication 1 comprenant du jus d'orange qui n'est pas issu de concentré, ou la boisson à base de jus d'orange selon la revendication 1 comprenant du jus d'orange qui est du jus à 100% non issu de concentré sans note dominante de saveur orange citron ni aucun minéraux et vitamines ajoutés, ou dans laquelle la note dominante de saveur orange citron est présente en une quantité suffisante pour au moins masquer sensiblement l'arrière-goût de la source de calcium.

5. Boisson à base de jus d'orange selon la revendication 4, dans laquelle le jus d'orange est un jus à 100 % non issu de concentré.

6. Boisson à base de jus d'orange selon la revendication 1, comprenant en outre un agent nutraceutique, dans laquelle l'agent nutraceutique est, de préférence, sélectionné parmi des vitamines nutraceutiques, des acides gras oméga 3, des sucres aminés, des fibres et des mélanges de ces derniers, ou
dans laquelle l'agent nutraceutique est sélectionné parmi la glucosamine, le collagène, la chondroïtine, le méthyl-sulfonyl-méthane, l'acide hyaluronique, le lycopène, l'acide linoléique et des mélanges de ces derniers.

7. Procédé de fabrication d'une boisson à base de jus d'orange comportant une source biologiquement disponible de calcium comprenant :
l'introduction d'au moins 100 mg de calcium par portion de 240 ml, le calcium provenant d'une source de calcium comprenant de 40 % à 65 % de lactate de calcium et de 35 % à 60 % d'hydroxyapatite ;
la dissolution de la source de calcium dans du jus d'orange
l'introduction de 0,001 % à 0,004 % en poids de la composition totale d'un composant de note dominante d'une saveur orange citron suffisant pour masquer l'arrière-goût de la source de calcium ;
la dispersion du composant de note dominante d'une saveur orange citron dans la boisson ; et
la formation d'une boisson finale prête à boire.

8. Procédé selon la revendication 7, comprenant en outre l'introduction d'une source de vitamine D sélectionnée parmi le groupe constitué par la vitamine D2, la vitamine D3 et des mélanges de celles-ci en une quantité telle que la boisson finale comporte au moins 50 U.I. de vitamine D par portion de 240 ml et la dispersion de la vitamine D dans la boisson.

9. Procédé selon la revendication 7 ou 8, comprenant en outre la préparation d'un agent nutraceutique et la dispersion de l'agent nutraceutique dans la boisson.
